# EUROPÄISCHE PATENTSCHRIFT

(11) **EP 4 568 874 B1**
(45) Veröffentlichungstag und Bekanntmachung des Hinweises auf die Patenterteilung: **10.06.2026**
(21) Anmeldenummer: 23754722.9
(22) Anmeldetag: 04.08.2023
(51) Int. Cl.: B62D 33/06, F16F 9/04, B60G 11/27, B60G 17/015, B60G 17/052, B60G 99/00, F16F 15/027, F16F 15/023, F16F 9/05

(54) **FAHRZEUG MIT EINEM KABINENLAGERUNGSSYSTEM MIT PASSIVEN DRUCKLUFTERZEUGER**
VEHICLE WITH A CABIN SUSPENSION SYSTEM WITH PASSIVE AIR COMPRESSOR
VÉHICULE ÉQUIPÉ D'UN SYSTÈME DE SUSPENSION DE LA CABINE AVEC GÉNÉRATEUR D'AIR COMPRIMÉ PASSIF

(30) Priorität: 08.08.2022 DE 102022208208
(43) Veröffentlichungstag der Anmeldung: 18.06.2025
(73) Patentinhaber: ZF Friedrichshafen AG, 88046 Friedrichshafen (DE)
(72) Erfinder: BEHNER, Manuel, 83661 Lenggries (DE); MEMMEL, Alfred, 97453 Schonungen (DE); NOWOTKA, Thomas, 97494 Bundorf (DE)
(74) Vertreter: ZF Friedrichshafen AG
(86) Internationale Anmeldenummer: PCT/EP2023/071666
(87) Internationale Veröffentlichungsnummer: WO 2024/033258

(56) Entgegenhaltungen:
- EP-B1- 0 915 796
- EP-B1- 3 495 176
- DE-A1- 102009 012 581
- US-A- 3 966 009
- US-A- 4 029 305

## Beschreibung

Die Erfindung betrifft ein Fahrzeug mit den Merkmalen des Oberbegriffs des Anspruchs 1.

Es sind, insbesondere im Nutzfahrzeugbereich, Lagerungssysteme zur federnden und schwingungsgedämpften Lagerung einer Fahrerkabine gegenüber dem Fahrzeugrahmen bekannt, welche zur Komfortverbesserung während eines Fahrbetriebes dienen. Üblicherweise wird das Lagerungssystem mittels Luftfedern umgesetzt, welche zwischen Fahrzeugkabine und Fahrzeugrahmen angeordnet sind. Die Luftfedern sind an eine Luftversorgung angeschlossen, wobei die Luftversorgung in der Regel über einen im Fahrzeug befindlichen Luftmassenspeicher, welcher in der Regel als ein Druckspeicher ausgebildet ist, realisiert wird, der mithilfe eines Kompressors mit Luftmasse befüllt wird und über eine Steuerung die Luftversorgung für die einzelnen Luftfedern bereitstellt. Der Kompressor muss hierzu mit elektrischer Energie gespeist werden.

Die Druckschrift DE 10 2009 012581 A1 beschreibt ein aktives Federungssystem mit Luftfedern für Fahrzeugkabinen, elektrischem Kompressor und Skyhook-Regelung. DE 10 2009 012581 A1 ist auf Reduzierung von Vibrationen und Erhöhung des Fahrkomforts für den Fahrer fokussiert, und verwendet komplexe Regelung mit mehreren Sensoren. DE 10 2009 012581 A1 offenbart die Präambel des Anspruchs 1.

Die Druckschrift DE 10 2013 009 204 A1 beschreibt ein System zur Niveauregelung eines Fahrerhauses eines Nutzfahrzeugs gegenüber einem Fahrzeugchassis sowie ein entsprechendes Betriebsverfahren. Das System umfasst eine gefederte Lagerung, um das Fahrerhaus federnd auf dem Fahrzeugchassis zu lagern; ein Abstandssensormittel, das eingerichtet ist, Relativbewegungen und/oder einen Abstand zwischen Fahrerhaus und Fahrzeugchassis zu erfassen; und ein Steuermittel, das zur variablen Ansteuerung der gefederten Lagerung eingerichtet ist, wobei Signale des Abstandsensormittels zur Ansteuerung der gefederten Lagerung verwendet werden. Die gefederte Lagerung ist auf eine erste Höhenposition einstellbar, so dass der Abstand zwischen Fahrerhaus und Fahrzeugchassis durch das Steuermittel auf einen ersten Sollabstand gesteuert wird. Die gefederte Lagerung ist auf zumindest eine zweite Höhenposition einstellbar, so dass der Abstand zwischen Fahrerhaus und Fahrzeugchassis durch das Steuermittel auf einen zweiten Sollabstand gesteuert wird, wobei das Steuermittel die gefederte Lagerung auf die erste oder auf die zumindest eine zweite Höhenposition in Abhängigkeit zumindest eines Parameters betreffend eine Fahrstrecke und/oder einen Fahrzeugzustand einstellt.

Die Erfindung hat sich zur Aufgabe gestellt, ein Kabinenlagerungssystem der eingangs genannten Art zu schaffen, welches sich durch einen geringen Energieverbrauch sowie einen kostengünstigen Aufbau auszeichnet.

Diese Aufgabe wird erfindungsgemäß durch ein Fahrzeug mit den Merkmalen des Anspruchs 1 gelöst. Vorteilhafte Ausgestaltungen ergeben sich aus den Unteransprüchen, den Zeichnungen und/oder der Beschreibung.

Gegenstand der Erfindung ist ein Fahrzeug mit einem Fahrzeugrahmen und einer Fahrzeugkabine, wobei die Fahrzeugkabine relativ zu dem Fahrzeugrahmen bewegbar ist. Unter der Fahrzeugkabine, auch als Führerhaus bezeichnet, wird der Teil des Fahrzeugaufbaus verstanden, der einen Raum für den Fahrzeugführer und ggf. ein oder mehrere Begleitpersonen bildet. Unter Fahrzeugrahmen, auch als Chassis oder Fahrgestell bezeichnet, wird der Teil des Fahrzeugaufbaus verstanden, der den Antrieb, die Fahrzeugkabine und ggf. Nutzlasten aufnimmt bzw. trägt.

Das Fahrzeug weist ein, insbesondere pneumatisches, Kabinenlagerungssystem auf. Insbesondere dient das Kabinenlagerungssystem zur Schwingungsabschirmung und/oder zur Lageänderung der Fahrzeugkabine gegenüber dem Fahrzeugrahmen.

Das Kabinenlagerungssystem weist mindestens oder genau eine zwischen dem Fahrzeugrahmen und der Fahrzeugkabine angeordnete Luftfeder auf. Die Luftfeder hat die Funktion die Federungscharakteristik und/oder die Lage der Fahrzeugkabine gegenüber dem Fahrzeugrahmen zu beeinflussen, indem das Luftvolumen und/oder Luftmasse der Luftfeder verändert wird. Prinzipiell kann die Fahrzeugkabine ausschließlich über die mindestens eine Luftfeder an dem Fahrzeugrahmen abgestützt sein. Alternativ ist die Fahrzeugkabine jedoch über mindestens ein Dämpfungselement und/oder ein Federelement und/oder ein Lagerelement an dem Fahrzeugrahmen zusätzlich abgestützt bzw. gelagert. Im Speziellen ist vorgesehen, dass das Kabinenlagerungssystem mindestens zwei oder genau zwei der Luftfedern aufweist, wobei mindestens jeweils eine der Luftfedern auf einer Fahrzeugseite angeordnet ist. Die Luftfeder ist im Wesentlichen durch einen Rollbalg gebildet, welcher einerseits mit einer Aufnahmeplatte sowie andererseits mit einem Abrollkolben luftdicht verbunden ist.

Das Kabinenlagerungssystem weist eine Ventileinheit auf, welche zur variablen Einstellung der Luftmasse in der Luftfeder ausgebildet und/oder geeignet ist. Prinzipiell ist die Ventileinheit in die Luftfeder integriert. Alternativ kann die Ventileinheit jedoch auch als eine zentrale Ventileinheit ausgebildet sein, welche zur variablen Einstellung der Luftmasse von zwei oder mehr Luftfedern dient. Vorzugsweise kann durch die Ventileinheit in mindestens einer der Luftfedern die Luftmasse erhöht werden, um die Luftfeder bzw. die Fahrzeugkabine anzuheben, oder die Luftmasse reduziert werden, um die Luftfeder bzw. die Fahrzeugkabine abzusenken. Insbesondere wird der Luftfeder hierzu eine Luftmasse bereitgestellt, welche über die Ventileinheit der Luftfeder zugeführt bzw. abgeführt wird.

Das Kabinenlagerungssystem weist eine Lagesensorik auf, welche zur Erfassung einer Relativlage zwischen der Fahrzeugkabine und dem Fahrzeugrahmen ausgebildet und/oder geeignet ist. Insbesondere ist die Lagesensorik ausgebildet einen Abstand und/oder eine Bewegung und/oder eine Neigung der Fahrzeugkabine relativ zu dem Fahrzeugrahmen, insbesondere während einem Fahrbetrieb, zu erfassen. Die Lagesensorik kann hierzu beispielsweise einen Wegsensor und/oder einen Neigungssensor und/oder einen Beschleunigungssensor aufweisen. Vorzugsweise ist die Lagesensorik ausgebildet, eine absolute oder relative Position der Fahrzeugkabine zu erfassen.

Das Kabinenlagerungssystem weist eine Kontrolleinheit auf, welche ausgebildet ist die Ventileinheit der Luftfeder auf Basis der erfassten Relativlage und/oder Absolutlage zu kontrollieren. Insbesondere ist die Kontrolleinheit als eine elektronische Kontrolleinheit (ECU) ausgebildet. Die Kontrolleinheit kann als ein Fahrzeugsteuergerät ausgebildet oder zumindest in das Fahrzeugsteuergerät integriert sein. Alternativ kann die Kontrolleinheit jedoch auch durch ein separates Steuergerät gebildet sein, welches beispielsweise über ein Bussystem, z.B. CAN-Bus, mit dem Fahrzeugsteuergerät verbunden ist. Insbesondere ist die Kontrolleinheit ausgebildet, die Fahrzeugkabine bzw. die Luftfeder in Abhängigkeit der Relativlage abzusenken oder anzuheben und/oder den Luftmasse in der Luftfeder zur erhöhen oder zu reduzieren. Besonders bevorzugt ist die Kontrolleinheit signaltechnisch mit der Lagesensorik und der Ventileinheit verbunden.

Im Rahmen der Erfindung wird vorgeschlagen, dass das Kabinenlagerungssystem mindestens oder genau einen passiven Drucklufterzeuger aufweist, welcher dazu ausgebildet ist, auf Basis einer Relativbewegung zwischen dem Fahrzeugrahmen und der Fahrzeugkabine, insbesondere während des Fahrbetriebes, eine Luftmasse in Form von Druckluft für die mindestens eine Luftfeder zu fördern. Insbesondere ist das Fahrzeug als ein Fahrzeug ohne einen elektrisch angetriebenen Kompressor ausgebildet, wobei die für die Luftfeder benötigte Luftmasse ausschließlich oder größtenteils durch den passiven Drucklufterzeuger gefördert wird. Vorzugsweise ist der Drucklufterzeuger derart mit dem Fahrzeugrahmen und der Fahrzeugkabine bewegungsgekoppelt, sodass die im Fahrbetrieb auftretende Relativbewegung zwischen der Fahrzeugkabine und dem Fahrzeugrahmen als Energiequelle zur Förderung der Luftmasse für mindestens eine Luftfeder genutzt werden kann.

Es wird somit ein pneumatisches Kabinenlagerungssystem vorgeschlagen, welches durch die Nutzung der Bewegungsenergie zur Förderung der Luftmasse nicht mehr aktiv mit Energie versorgt werden muss. Somit kann das Kabinenlagerungssystem besonders energieeffizient und autark betrieben werden. Ein weiterer Vorteil besteht zudem darin, dass der passive Drucklufterzeuger deutlich einfacher und kostengünstiger als ein in dem Fahrzeug üblicherweise verbauter Kompressor ausgebildet werden kann.

In einer vorteilhaften Ausgestaltung ist vorgesehen, dass der Drucklufterzeuger derart mit dem Fahrzeugrahmen und der Fahrzeugkabine bewegungsgekoppelt ist, dass der Drucklufterzeuger bei einer relativen Wankbewegung bzw. einer Rollbewegung zwischen Fahrzeugrahmen und Fahrzeugkabine, insbesondere um eine Fahrzeuglängsachse (x-Achse), die Luftmasse fördert. Alternativ oder optional ergänzend ist vorgesehen, dass der Drucklufterzeuger derart mit dem Fahrzeugrahmen und der Fahrzeugkabine bewegungsgekoppelt ist, dass der Drucklufterzeuger bei einer relativen Nickbewegung zwischen Fahrzeugrahmen und Fahrzeugkabine, insbesondere um eine Fahrzeugquerachse (y-Achse), die Luftmasse fördert. Insbesondere ist der Drucklufterzeuger hierzu außermittig, insbesondere zu der Fahrzeuglängsachse und/oder der Fahrzeugquerachse versetzt zwischen Fahrzeugkabine und dem Fahrzeugrahmen angeordnet. Optional kann das Kabinenlagerungssystem mindestens einen weiteren Drucklufterzeuger aufweisen, wobei der eine Drucklufterzeuger zur Drucklufterzeugung bei der relativen Wankbewegung und der andere Drucklufterzeuger zur Drucklufterzeugung bei der relativen Nickbewegung ausgebildet bzw. angeordnet ist. Es wird somit ein Drucklufterzeuger vorgeschlagen, welcher sich in einfacher Weise zwischen Fahrzeugrahmen und Fahrzeugkabine unter Ausnutzung unterschiedlicher Relativbewegungen zur Drucklufterzeugung integrieren lässt.

In einer weiteren Ausführungsvariante ist vorgesehen, dass der Drucklufterzeuger als eine Luftpumpe ausgebildet ist, welche einerseits mit dem Fahrzeugrahmen und andererseits mit der Fahrzeugkabine gekoppelt ist. Insbesondere wird die Relativbewegung in eine Arbeitsbewegung der Luftpumpe übersetzt, um eine in der Luftpumpe befindliche Luftmasse zu fördern und der Luftfeder zumindest mittelbar bereitzustellen. Insbesondere ist die Luftfeder hierzu pneumatisch mit der Luftpumpe, insbesondere mindestens einem Arbeitsraum der Luftpumpe, verbunden. Prinzipiell kann die durch die Luftpumpe bereitgestellte Luftmasse unmittelbar oder mittelbar über einen Luftmassenspeicher, wie nachfolgend näher erläutert, der Ventileinheit bereitgestellt werden. Es wird somit ein Drucklufterzeuger vorgeschlagen, welcher sich durch einen besonders einfachen und kostengünstigen Aufbau auszeichnet und zudem in einfacher Weise zwischen Fahrzeugrahmen und Fahrzeugkabine integriert werden kann.

In einer weiteren beispielsweisen Ausführung ist vorgesehen, dass der Drucklufterzeuger einen Zylinder sowie einen in dem Zylinder über eine Kolbenstange geführten Kolben aufweist, welcher den Zylinder in einen ersten und einen zweiten Arbeitsraum unterteilt. Insbesondere ist der Drucklufterzeuger zumindest als eine einfachwirkende Kolbenluftpumpe ausgebildet. Vorzugsweise ist die Kolbenstange an einem Ende mit dem Kolben verbunden und an dem anderen Ende über eine Anbindungsschnittstelle wahlweise an den Fahrzeugrahmen oder die Fahrzeugkabine angebunden. Entsprechend kann der Zylinder auf einer der Kolbenstange abgewandten Seite über eine weitere Anbindungsschnittstelle wahlweise an der Fahrzeugkabine oder den Fahrzeugrahmen angebunden sein. Insbesondere ist der erste Arbeitsraum als ein kolbenstangennaher Arbeitsraum und der zweite Arbeitsraum als ein kolbenstangenferner Arbeitsraum zu verstehen.

Gemäß dieser Ausführungsvariante ist zumindest einer der Arbeitsräume über ein Einlassventil mit einer Umgebung und der andere Arbeitsraum über ein Auslassventil zumindest mittelbar mit der Luftfeder verbunden. Insbesondere wird die Relativbewegung zwischen Fahrzeugkabine und Fahrzeugrahmen in eine Hubbewegung des Kolbens übersetzt, wobei basierend auf der Hubbewegung, insbesondere bei einem Einfahren und/oder Ausfahren der Kolbenstange, die Luftmasse gefördert wird. Prinzipiell können das mindestens eine Ein- und Auslassventil in den Zylinder integriert sein. Alternativ können das mindestens eine Ein- und Auslassventil jedoch auch separat zu der Luftpumpe ausgebildet und/oder vor bzw. nach der Luftpumpe in einen Strömungsweg eingebunden sein. Es wird somit ein passiver Drucklufterzeuger vorgeschlagen, welcher sich durch einen besonders einfachen und robusten Aufbau auszeichnet.

In einer weiteren Ausgestaltung ist vorgesehen, dass der Drucklufterzeuger als eine doppeltwirkende Kolbenluftpumpe ausgebildet ist. Insbesondere ist doppelwirkend dahingehend zu verstehen, dass die Luftpumpe sowohl bei einer Zugbewegung als auch bei einer Druckbewegung bzw. beim Einfahren und Ausfahren der Kolbenstange die Luftmasse fördert. Hierzu weist der Drucklufterzeuger ein erstes und ein zweites Einlassventil sowie ein erstes und ein zweites Auslassventil auf. Der erste Arbeitsraum ist über das erste Einlassventil mit der Umgebung und über das erste Auslassventil zumindest mittelbar mit der Luftfeder verbunden. Der zweite Arbeitsraum ist über das zweite Einlassventil mit der Umgebung und über das zweite Auslassventil zumindest mittelbar mit der Luftfeder verbunden. Bei einer Druckbewegung, also beim Einfahren der Kolbenstange in den Zylinder, strömt Luftmasse aus der Umgebung über das erste Einlassventil in den ersten Arbeitsraum, wobei zugleich die in dem zweiten Arbeitsraum befindliche Luftmasse komprimiert und über das zweite Auslassventil als der Luftmassenstrom ausströmt. Bei einer Zugbewegung, also beim Ausfahren der Kolbenstange aus den Zylinder, strömt Luftmasse aus der Umgebung über das zweite Einlassventil in den zweiten Arbeitsraum, wobei zugleich die in dem ersten Arbeitsraum befindliche Luftmasse komprimiert und über das erste Auslassventil als der Luftmassenstrom ausströmt. Vorzugsweise sind das erste und das zweite Einlassventil und/oder das erste und das zweite Auslassventil als ein federbelastetes Rückschlagventil ausgebildet, welche in Abhängigkeit der Hubbewegung selbsttätig öffnen bzw. schließen. Es wird somit eine Luftpumpe vorgeschlagen, welche sich durch eine dauerhafte Luftmassenförderung bei der Relativbewegung auszeichnet und somit besonders effizient betrieben werden kann.

In einer Weiterbildung ist vorgesehen, dass das Kabinenlagerungssystem einen Luftmassenspeicher aufweist, welcher zur Zwischenspeicherung der von dem Drucklufterzeuger erzeugten Luftmasse ausgebildet und/oder geeignet ist. Insbesondere hat der Luftmassenspeicher die Funktion, die von dem Drucklufterzeuger geförderte und zugeführte Luftmasse zu speichern und über die Ventileinheit der Luftfeder bereitzustellen. Insbesondere ist der Luftmassenspeicher hierzu strömungstechnisch zwischen der Luftpumpe und der Luftfeder angeordnet. Dabei ist der Luftmassenspeicher über eine eingangsseitige Druckluftleitung mit dem Drucklufterzeuger und über eine ausgangsseitige Druckluftleitung mit der Luftfeder pneumatisch verbunden. Insbesondere ist der Luftmassenspeicher als ein Druckspeicher ausgebildet. Der Luftmassenspeicher kann beispielsweise als ein zentraler Luftmassenspeicher ausgebildet sein, wobei die eine oder mehrere der Luftfedern durch den Luftmassenspeicher mit Luftmasse versorgt werden können. Im Speziellen kann der Luftmassenspeicher derart ausgelegt sein, dass die Luftfeder mindestens einmal, insbesondere in einem drucklosen Zustand, angehoben werden kann. Prinzipiell kann der Luftmassenspeicher an beliebiger Stelle in dem Fahrzeug, z.B. dem Fahrzeugrahmen oder der Fahrzeugkabine, angeordnet sein. Bevorzugt jedoch ist der Luftmassenspeicher zwischen dem Fahrzeugrahmen und der Fahrzeugkabine, insbesondere benachbart zu dem Drucklufterzeuger und/oder der Luftfeder, angeordnet. Es wird somit ein Kabinenlagerungssystem vorgeschlagen, welches sich durch eine hohe Betriebssicherheit auszeichnet, wobei durch den Luftmassenspeicher eine Druckluftversorgung über einen begrenzten Zeitraum, insbesondere im Stillstand des Fahrzeuges, sichergestellt werden kann.

In einer vorteilhaften Umsetzung ist vorgesehen, dass das mindestens eine Auslassventil, vorzugsweise das erste und/oder das zweite Auslassventil des Drucklufterzeugers über die eingangsseitige Druckluftleitung mit dem Luftmassenspeicher verbunden ist. Insbesondere sind das erste und das zweite Auslassventil über eine gemeinsame Druckluftleitung mit dem Luftmassenspeicher verbunden. Alternativ können das erste und das zweite Auslassventil jedoch auch über jeweils eine separate Druckluftleitung mit dem Luftmassenspeicher verbunden sein. Es wird somit ein besonders einfach zu installierendes Kabinenlagerungssystem vorgeschlagen.

In einer weiteren vorteilhaften Ausführung ist vorgesehen, dass der Luftmassenspeicher ein Befüllventil aufweist, welches zur externen Befüllung und/oder zur Vorbefüllung des Luftmassenspeichers mit Luftmasse ausgebildet und/oder geeignet ist. Insbesondere dient das Befüllventil zum Anschluss einer Druckluftquelle für die Zufuhr von Luftmasse von außen. Beispielsweise ist das Befüllventil als ein federbelastetes Rückschlagventil ausgebildet, welches einen Druckluftanschluss zum Anschluss der Druckluftquelle aufweist. Insbesondere ist das Befüllventil bei einer Einbausituation des Luftmassenspeichers in dem Fahrzeug von außen zugänglich, sodass der Luftmassenspeicher bei Bedarf mit Luftmasse nachgefüllt werden kann.

In einer weiteren Ausgestaltung ist vorgesehen, dass die Ventileinheit der Luftfeder ein Einlassventil und ein Auslassventil aufweist, wobei die Kontrolleinrichtung ausgebildet ist, das Einlassventil oder das Auslassventil zum Anheben oder Absenken der Luftfeder zu betätigen. Vereinfacht gesagt, wird das Einlassventil betätigt um der Luftfeder Luftmasse zum Anheben zuzuführen, wobei zugleich das Auslassventil geschlossen ist. Entsprechend wird das Auslassventil geöffnet, um Luftmasse zum Absenken der Luftfeder abzuführen, wobei zugleich das Einlassventil geschlossen ist. Prinzipiell sind das Einlassventil und/oder das Auslassventil als ein Schaltventil mit diskreten Schaltzuständen, vorzugsweise genau zwei Schaltzustände, ausgebildet. Alternativ können das Einlassventil und/oder das Auslassventil jedoch auch als ein Stetigventil, insbesondere ein Drosselventil, mit kontinuierlichen Schaltzuständen ausgebildet sein. Besonders bevorzugt sind das Einlassventil und das Auslassventil durch die Kontrolleinheit elektrisch steuerbar bzw. regelbar. Das Einlassventil und das Auslassventil können hierzu jeweils über eine Signalleitung mit der Kontrolleinheit verbunden sein. Es wird somit eine Luftfeder vorgeschlagen, welche sich durch eine einfache Ansteuerung sowie einen kostengünstigen Aufbau auszeichnet.

In einer weiteren Ausführung ist vorgesehen, dass das Einlassventil der Luftfeder über die ausgangsseitige Druckluftleitung mit dem Luftmassenspeicher unmittelbar verbunden ist. Insbesondere weist jede der Luftfedern ein separates Einlassventil auf, wobei sämtliche Einlassventile gemeinsam über die ausgangsseitige Druckluftleitung mit dem Luftmassenspeicher verbunden sind. Prinzipiell können die Einlassventile als einzelne in die jeweilige Luftfeder integrierte Einlassventile gebildet sein. Alternativ können die Einlassventile jedoch auch gemeinsam in einem Ventilblock zusammengefasst sein. Weiterhin kann vorgesehen sein, dass das Auslassventil der Luftfeder wahlweise mit dem Luftmassenspeicher oder mit der Umgebung verbunden ist. Es wird somit ein Kabinenlagerungssystem vorgeschlagen, welches sich durch einen einfachen Anschluss der Luftfeder bzw. der mehreren Luftfedern auszeichnet.

In einer weiteren Ausgestaltung ist vorgesehen, dass das Kabinenlagerungssystem ein Überdruckventil aufweist. Insbesondere ist das Überdruckventil ausgebildet, den Luftmassenspeicher und/oder die Luftfeder vor einem unzulässigen Druckanstieg zu schützen. Hierzu kann das Überdruckventil ab einem festgelegten Ansprechdruck öffnen, sodass die Luftmasse über das Überdruckventil bis zum Erreichen eines festgelegten Schließdrucks in die Umgebung abgeleitet wird. Das Überdruckventil ist zwischen Drucklufterzeuger und der Luftfeder, insbesondere zwischen mindestens einem Auslassventil des Drucklufterzeugers und dem Einlassventil der Luftfeder, angeschlossen. Insbesondere ist das Überdruckventil wahlweise nach mindestens einem Auslassventil an den Drucklufterzeuger oder an die eingangsseitige Druckluftleitung oder an den Luftmassenspeicher angeschlossen. Es wird somit ein Kabinenlagerungssystem vorgeschlagen, welches sich durch einen besonders sicheres Betriebsverhalten sowie eine einfache Überwachung des Luftdrucks auszeichnet.

In einer Weiterbildung ist vorgesehen, dass die Kontrolleinrichtung ausgebildet ist eine Niveauregulierung und/oder eine Neigungsregulierung der Fahrzeugkabine durch eine Steuerung und/oder Regelung der Ventileinheit auf Basis der Relativlage umzusetzen. Vorteilhafter Weise kann die Kontrolleinrichtung derart ausgebildet sein, dass diese durch eine Zuführung von Luftmasse in die Luftfeder den Abstand und/oder die Neigung bzw. einen Neigungswinkel der Fahrzeugkabine zu dem Fahrzeugrahmen zu erhöhen oder durch eine Abführung von Luftmasse aus der Luftfeder den Abstand und/oder die Neigung bzw. einen Neigungswinkel der Fahrzeugkabine zu dem Fahrzeugrahmen zu verringern, um das Niveau und/oder die Neigung der Fahrzeugkabine relativ zu dem Fahrzeugrahmen zu verändern.

In einer weiteren alternativen Realisierung kann vorgesehen sein, dass das Kabinenlagerungssystem mindestens oder genau einen Schwingungsdämpfer aufweist, welcher zur schwingungsgedämpften Abstützung der Fahrzeugkabine an dem Fahrzeugrahmen ausgebildet und/oder geeignet ist. Der Schwingungsdämpfer kann als ein Hydraulikdämpfer oder Gasdruckdämpfer ausgebildet sein. Insbesondere ist der Schwingungsdämpfer zwischen dem Fahrzeugrahmen und der Fahrzeugkabine angeordnet. Dabei ist der Schwingungsdämpfer einerseits mit dem Fahrzeugrahmen und andererseits mit der Fahrzeugkabine gekoppelt. Vorzugsweise ist der Schwingungsdämpfer verschwenkbar an der Fahrzeugkabine und/oder dem Fahrzeugrahmen gelagert. Insbesondere kann je Luftfeder jeweils mindestens ein Schwingungsdämpfer vorgesehen sein. Prinzipiell kann auf jeder Fahrzeugseite mindestens ein Schwingungsdämpfer angeordnet sein. Im Speziellen können auf jeder Fahrzeugseite genau zwei der Schwingungsdämpfer und/oder zwei der Luftfedern angeordnet sein. Dabei können jeweils zwei der Schwingungsdämpfer bzw. Luftfedern in einem Frontbereich und jeweils zwei der Schwingungsdämpfer und/oder Luftfedern in einem Heckbereich des Fahrzeugs bzw. der Fahrzeugkabine angeordnet sein.

In einer weiteren beispielsweisen Umsetzung ist vorgesehen, dass der Drucklufterzeuger in Fahrtrichtung betrachtet in einem Frontbereich und der Schwingungsdämpfer in einem Heckbereich angeordnet ist. Alternativ kann jedoch auch der mindestens eine Schwingungsdämpfer in dem Frontbereich und der mindestens eine Drucklufterzeuger in dem Heckbereich angeordnet sein. Insbesondere ist die mindestens eine Luftfeder in Fahrtrichtung betrachtet zwischen dem Drucklufterzeuger und dem Schwingungsdämpfer angeordnet ist. Im Speziellen kann auf jeder Fahrzeugseite jeweils ein Schwingungsdämpfer, eine Luftfeder und ein Drucklufterzeuger angeordnet sein, wobei diese in Bezug auf eine Fahrzeuglängsachse spiegelsymmetrisch zueinander angeordnet sind. Es wird somit ein Kabinenlagerungssystem vorgeschlagen, welches sich durch schwingungsgedämpfte Lagerung sowie eine einfache Übertragung der Relativbewegung auf den Drucklufterzeuger auszeichnet.

In einer weiteren Ausgestaltung ist vorgesehen, dass das Fahrzeug ein Nutzfahrzeug, zum Beispiel ein Lkw, oder eine Landmaschine, zum Beispiel ein Schlepper, oder eine Baumaschine, zum Beispiel ein Radlader, ist.

Weitere Merkmale, Vorteile und Wirkungen der Erfindung ergeben sich aus der nachfolgenden Beschreibung bevorzugter Ausführungsbeispiele der Erfindung. Dabei zeigt:

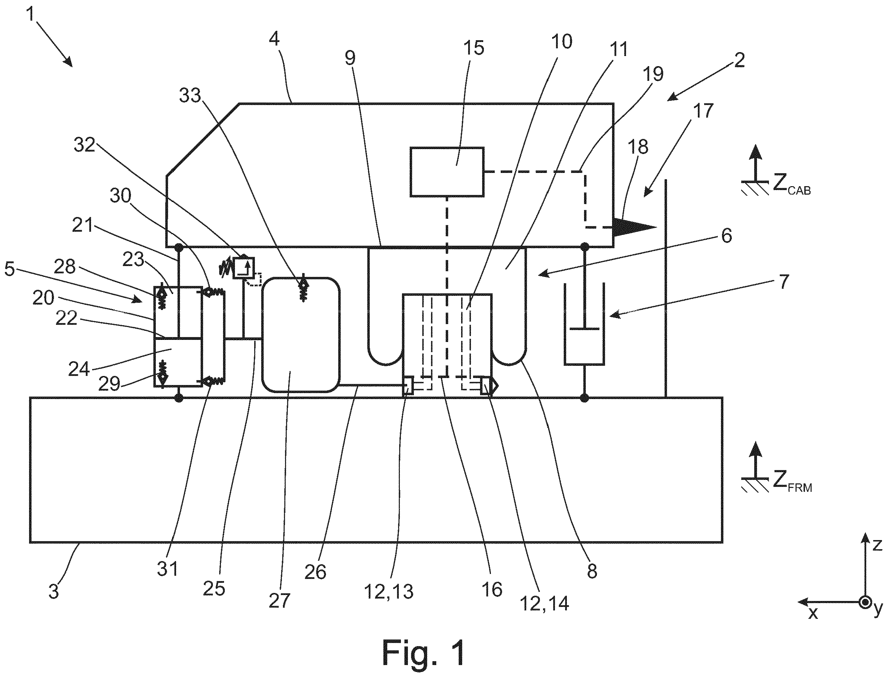

- Figur 1: eine schematische Darstellung eines Fahrzeugs mit einem Kabinenlagerungssystem.

Figur 1 zeigt in einer stark schematisierten Darstellung ein Fahrzeug 1 mit einem Kabinenlagerungssystem 2 als ein Ausführungsbeispiel der Erfindung. Beispielsweise ist das Fahrzeug ein Nutzfahrzeug, z.B. ein Lkw.

Das Fahrzeug 1 weist einen Fahrzeugrahmen 3 sowie eine Fahrzeugkabine 4 auf, wobei die Fahrzeugkabine 4 relativ zu dem Fahrzeugrahmen 3 bewegbar ist. Das Kabinenlagerungssystem 2 stellt neben dem Fahrkomfort die relative Lage der Fahrzeugkabine 4 zum Fahrzeugrahmen 3 sicher.

Das Kabinenlagerungssystem 2 weist hierzu mindestens eine geregelte Luftfeder 6 sowie mindestens einen Schwingungsdämpfer 7 auf, welche zur schwingungsdämpfenden Abstützung der Fahrzeugkabine 4 an dem Fahrzeugrahmen 3 dienen. Die Luftfeder 6 und der Schwingungsdämpfer 7 sind hierzu jeweils zwischen dem Fahrzeugrahmen 3 und der Fahrzeugkabine 4 angeordnet und einerseits mit dem Fahrzeugrahmen 3 und andererseits mit der Fahrzeugkabine 4 gekoppelt.

Die Luftfeder 6 weist im Wesentlichen einen Rollbalg 8, eine Aufnahmeplatte 9 sowie einen Abrollkolben 10 auf, welche luftdicht miteinander verbunden sind und eine Luftkammer 11 begrenzen. Die Aufnahmeplatte 9 ist mit der Fahrzeugkabine 4 und der Abrollkolben 10 mit dem Fahrzeugrahmen 3 verbunden.

Das Kabinenlagerungssystem 2 weist eine Ventileinheit 12 auf, welche zur variablen Einstellung der Luftmasse in der Luftkammer 11 der Luftfeder 6 dient. Hierzu weist die Ventileinheit 12 ein Einlassventil 13 zur Luftmassenzuführung und ein Auslassventil 14 zur Luftmassenabführung auf. Beispielsweise sind das Einlassventil 13 und das Auslassventil 14 jeweils als ein Schaltventil mit zwei diskreten Schaltzuständen ausgebildet, welche in den Abrollkolben 10 integriert sind.

Das Kabinenlagerungssystem 2 weist eine elektronische Kontrolleinheit 15 zur Regelung und/oder Steuerung der Ventileinheit 12 auf, welche über Signalleitungen 16 mit dem Einlassventil 13 und dem Auslassventil 14 signaltechnisch verbunden ist. Beispielsweise ist die Kontrolleinheit 15 als ein sogenanntes electronic Cabin Air Leveling Module (eCALM) ausgebildet.

Weiterhin weist das Kabinenlagerungssystem 2 eine Lagesensorik 17 auf, welche zur Erfassung einer Relativlage zwischen Fahrzeugrahmen 3 und Fahrzeugkabine 4 ausgebildet ist. Beispielsweise weist die Lagesensorik 17 mindestens einen Wegsensor 18 auf, welcher ausgebildet ist, eine relative oder absolute Position der Fahrzeugkabine 4 gegenüber dem Fahrzeugrahmen 3 zu erfassen. Beispielsweise ist der Wegsensor 18 als ein magnetischer und/oder induktiver und/oder optoelektronischer Sensor ausgebildet. Der Wegsensor 18 ist über eine weitere Signalleitung 19 mit der Kontrolleinheit 15 signaltechnisch verbunden, um die erfasste Relativlage bzw. die relative oder absolute Position der Fahrzeugkabine 4 an die Kontrolleinheit 15 zu übermitteln.

Die Kontrolleinheit 15 ist dabei ausgebildet, die Ventileinheit 12 auf Basis der Relativlage, z.B. mittels eines auf der Kontrolleinheit 15 ausgeführten Algorithmus, zu kontrollieren, um beispielsweise die Fahrzeugkabine 4 auf unterschiedliche Niveaus zu nivellieren, abzusenken oder anzuheben. Beispielsweise kann auf Basis der Relativlage entschieden werden, ob der Luftfeder 6 Luftmasse zu- oder abgeführt werden muss, wobei das Einlassventil 13 bzw. das Auslassventil 14 hierzu über die Signalleitungen 16 angesteuert bzw. geregelt werden.

Hierzu muss die Luftfeder 6 mit Luftmasse versorgt werden, wobei bei Fahrzeugen mit vorhandenem Druckluftsystem, dieses lediglich an die Luftfeder 6 angeschlossen werden muss. Ist ein solches Druckluftsystem nicht vorhanden, muss dieses separat implementiert werden, wobei das Druckluftsystem zur Drucklufterzeugung aktiv mit Energie versorgt werden muss. Es soll daher ein Druckluftsystem für ein Kabinenlagerungssystem 2 vorgeschlagen werden, welches nicht mehr aktiv mit Energie versorgt werden muss. Hierzu weist das Kabinenlagerungssystem 2 einen passiven Drucklufterzeuger 5 auf, welcher basierend auf einer Relativbewegung zwischen Fahrzeugrahmen 3 und Fahrzeugkabine 4 Luftmasse für die Luftfeder 6 fördert.

Der Drucklufterzeuger 5 ist gemäß dieser Ausführung als eine doppeltwirkende Luftkolbenpumpe ausgebildet, welche im Wesentlichen einen Zylinder 20 und einen an einer Kolbenstange 21 befestigten Kolben 22 aufweist, der innerhalb des Zylinders 20 entlang einer Innenwand geführt ist. Der Drucklufterzeuger 5 ist zwischen dem Fahrzeugrahmen 3 und der Fahrzeugkabine 4 angeordnet, wobei der Zylinder 20 einerseits mit dem Fahrzeugrahmen 3 und die Kolbenstange 21 andererseits mit der Fahrzeugkabine 4 bewegungsgekoppelt ist.

Der Kolben 22 unterteilt den Zylinder 20 in einen ersten Arbeitsraum 23 und einen zweiten Arbeitsraum 24. Die beiden Arbeitsräume 23, 24 sind jeweils über eine eingangsseitige Druckluftleitung 25 mit einem Luftmassenspeicher 27 verbunden, welcher die von dem Drucklufterzeuger 5 erzeugte Luftmasse speichert und der Luftfeder 6 bereitstellt. Hierzu ist der Luftmassenspeicher 27 über eine ausgangsseitige Druckluftleitung 26 mit dem Einlassventil 12 der Luftfeder 6 verbunden.

Weiterhin ist der erste Arbeitsraum 23 des Drucklufterzeugers 5 über ein erstes Einlassventil 28 mit der Umgebung bzw. der Atmosphäre und über ein erstes Auslassventil 30 mit dem Luftmassenspeicher 27 verbunden. Der zweite Arbeitsraum 24 ist über ein zweites Einlassventil 29 mit der Umgebung bzw. der Atmosphäre und über ein zweites Auslassventil 31 mit dem Luftmassenspeicher 27 verbunden. Hierbei sind die beiden Auslassventile 31 gemeinsam über die eingangsseitige Druckluftleitung 25 mit dem Luftmassenspeicher 27 verbunden.

Das Kabinenlagerungssystem 2 weist zudem eine Überdruckventil 32 auf, welches sicherstellt, dass sich kein zu hoher Druck im Luftmassenspeicher 27 ausbilden kann bzw. ein festgelegter Betriebsdruck nicht überschritten wird. Das Überdruckventil 32 ist in der gezeigten Darstellung an die eingangsseitige Druckluftleitung 25 angeschlossen.

Der Luftmassenspeicher 27 weist zudem ein Befüllventil 33 auf, wobei der Luftmassenspeicher 27 initial über das Befüllventil 33 befüllt werden kann. Das Befüllventil 33 ist beispielsweise zum Anschluss einer externen Druckluftquelle, wie z.B. ein Kompressor, geeignet, wodurch der Luftmassenspeicher 27 vorbefüllt oder bei Bedarf nachgefüllt werden kann.

Der Drucklufterzeuger 5 ist derart zwischen dem Fahrzeugrahmen 3 und der Fahrzeugkabine 4 angeordnet, dass Luftmasse sowohl bei einer relativen Wankbewegung zwischen Fahrzeugrahmen 3 und Fahrzeugkabine 4 um eine Fahrzeuglängsachse (x-Achse) als auch bei einer relativen Nickbewegung zwischen Fahrzeugrahmen 3 und Fahrzeugkabine 4 um eine Fahrzeugquerachse (y-Achse) gefördert wird. Hierzu ist der Drucklufterzeuger 5 in einem Frontbereich der Fahrzeugkabine 4 jeweils versetzt zu der Fahrzeuglängsachse (x-Achse) und der Fahrzeugquerachse (y-Achse) angeordnet. Der Schwingungsdämpfer 7 ist in einem Heckbereich der Fahrzeugkabine 4 angeordnet, wobei die Luftfeder 6 zwischen dem Drucklufterzeuger 5 und dem Schwingungsdämpfer 7 angeordnet ist. Beispielsweise können auf jeder Fahrzeugseite jeweils eine Luftfeder 6, ein Schwingungsdämpfer 7 sowie ein Drucklufterzeuger 5 spiegelsymmetrisch, insbesondere in Bezug auf die x-Achse, angeordnet sein.

In einem Fahrbetrieb werden die Relativbewegungen in eine relative Hubbewegung zwischen Zylinder 20 und Kolbenstange 21 übersetzt. Bei einem Einfahren der Kolbenstange 21 in den Zylinder 20 strömt Luftmasse über das erste Einlassventil 28 in den ersten Arbeitsraum 23 ein, wobei zugleich die in dem zweiten Arbeitsraum 24 befindliche Luftmasse durch den Kolben 22 komprimiert und über das zweite Auslassventil 31 als die Luftmasse ausströmt und in dem Luftmassenspeicher 27 gespeichert wird. Bei einem Ausfahren der Kolbenstange 21 aus dem Zylinder 20 strömt Luftmasse über das zweite Einlassventil 29 in den zweiten Arbeitsraum 24 ein, wobei zugleich die in dem ersten Arbeitsraum 23 befindliche Luftmasse durch den Kolben 22 komprimiert und über das erste Auslassventil 30 als die Luftmasse ausströmt und in dem Luftmassenspeicher 27 gespeichert wird. Die beiden Einlassventile 28, 29 und die beiden Auslassventile 30, 31 sind jeweils als ein federbelastetes Rückschlagventil ausgebildet, welche in Abhängigkeit der Hubbewegung selbsttätig den Strömungsweg freigeben oder sperren.

Basierend auf der Relativlage ist die Kontrolleinrichtung ausgebildet, eine, eine Niveauregulierung oder eine Neigungsregulierung der Fahrzeugkabine 4 gegenüber dem Fahrzeugrahmen 3 durch eine entsprechende Steuerung bzw. Regelung der Ventileinheit 12 umzusetzen. Beispielsweise wird hierzu das Einlassventil 13 bei geschlossenem Auslassventil 14 geöffnet, sodass die Luftmasse aus dem Luftmassenspeicher 27 in die Luftkammer 11 einströmen kann, wodurch die Luftfeder 6 angehoben und/oder eine Dämpfungskraft erhöht wird. Beispielsweise wird das Auslassventil 14 bei geschlossenem Einlassventil 13 geöffnet, sodass die Luftmasse aus der Luftkammer 11 in die Umgebung ausströmen kann, wodurch die Luftfeder 6 abgesenkt wird.

### Bezugszeichen

- 1: Fahrzeug
- 2: Kabinenlagerungssystem
- 3: Fahrzeugrahmen
- 4: Fahrzeugkabine
- 5: Drucklufterzeuger
- 6: Luftfeder
- 7: Schwingungsdämpfer
- 8: Rollbalg
- 9: Aufnahmeplatte
- 10: Abrollkolben
- 11: Luftkammer
- 12: Ventileinheit
- 13: Einlassventil
- 14: Auslassventil
- 15: Kontrolleinheit
- 16: Signalleitung
- 17: Lagesensorik
- 18: Wegsensor
- 19: weitere Signalleitung
- 20: Zylinder
- 21: Kolbenstange
- 22: Kolben
- 23: erster Arbeitsraum
- 24: zweiter Arbeitsraum
- 25: eingangsseitige Druckluftleitung
- 26: ausgangsseitige Druckluftleitung
- 27: Luftmassenspeicher
- 28: erstes Einlassventil
- 29: zweites Einlassventil
- 30: erstes Auslassventil
- 31: zweites Auslassventil
- 32: Überdruckventil
- 33: Befüllventil

## Patentansprüche

1. Fahrzeug (1)
mit einem Fahrzeugrahmen (3) und mit einer relativ zu dem Fahrzeugrahmen (3) bewegbar gelagerten Fahrzeugkabine (4),
mit einem Kabinenlagerungssystem (2),
wobei das Kabinenlagerungssystem (2) mindestens eine zwischen dem Fahrzeugrahmen (3) und der Fahrzeugkabine (4) angeordnete Luftfeder (6) aufweist, wobei eine Luftmasse in der Luftfeder (7) über eine Ventileinheit (12) variabel einstellbar ist, wobei das Kabinenlagerungssystem (2) eine Lagesensorik (17) zur Erfassung einer Relativlage zwischen Fahrzeugkabine (4) und Fahrzeugrahmen (3) und eine Kontrolleinheit (15) aufweist, wobei die Kontrolleinheit (15) ausgebildet ist, die Ventileinheit (12) der Luftfeder (6) auf Basis der Relativlage zu kontrollieren,
**dadurch gekennzeichnet, dass**
das Kabinenlagerungssystem (2) mindestens einen passiven Drucklufterzeuger (19) aufweist, welcher ausgebildet ist, auf Basis einer Relativbewegung zwischen Fahrzeugrahmen (3) und Fahrzeugkabine (4) Luftmasse für die Luftfeder (6) zu fördern.

2. Fahrzeug (1) nach Anspruch 1, **dadurch gekennzeichnet, dass** der Drucklufterzeuger (19) derart mit dem Fahrzeugrahmen (3) und der Fahrzeugkabine (4) bewegungsgekoppelt ist, dass der Drucklufterzeuger (19) bei einer relativen Wankbewegung und/oder einer relativen Nickbewegung zwischen Fahrzeugrahmen (3) und Fahrzeugkabine (4) Luftmasse fördert.

3. Fahrzeug (1) nach Anspruch 1 oder 2, **dadurch gekennzeichnet, dass** der Drucklufterzeuger (19) als eine Luftpumpe ausgebildet ist.

4. Fahrzeug (1) nach einem der vorhergehenden Ansprüche, **dadurch gekennzeichnet, dass** der Drucklufterzeuger (19) einen Zylinder (20) sowie einen in dem Zylinder (20) über eine Kolbenstange (21) geführten Kolben (22) aufweist, welcher den Zylinder (20) in einen ersten und einen zweiten Arbeitsraum (23, 24) unterteilt, wobei zumindest einer der Arbeitsräume (23, 24) über ein Einlassventil (28, 29) mit einer Umgebung und der andere Arbeitsraum (23, 24) über ein Auslassventil (30, 31) zumindest mittelbar mit der Luftfeder (6) verbunden ist.

5. Fahrzeug (1) nach Anspruch 4, **dadurch gekennzeichnet**, der Drucklufterzeuger (5) als eine doppeltwirkende Luftpumpe ausgebildet ist, wobei der erste Arbeitsraum (23) über ein erstes Einlassventil (28) mit einer Umgebung und über ein erstes Auslassventil (30) zumindest mittelbar mit der Luftfeder (6) verbunden ist und wobei der zweite Arbeitsraum (24) über ein zweites Einlassventil (29) mit einer Umgebung und über ein zweites Auslassventil (31) zumindest mittelbar mit der Luftfeder (6) verbunden ist.

6. Fahrzeug (1) nach einem der vorhergehenden Ansprüche, **dadurch gekennzeichnet, dass** das Kabinenlagerungssystem (2) einen Luftmassenspeicher (27) zur Zwischenspeicherung der von dem Drucklufterzeuger (5) geförderten Luftmasse, wobei der Luftmassenspeicher (27) über eine eingangsseitige Druckluftleitung (25) mit dem Drucklufterzeuger (5) und über eine ausgangsseitige Druckluftleitung (26) mit der Luftfeder (6) pneumatisch verbunden ist.

7. Fahrzeug (1) nach Anspruch 6, **dadurch gekennzeichnet, dass** das das erste und/oder das zweite Auslassventil (30, 31) des Drucklufterzeugers (5) über die eingangsseitige Druckluftleitung (25) mit dem Luftmassenspeicher (27) verbunden sind.

8. Fahrzeug (1) nach Anspruch 6 oder 7, **dadurch gekennzeichnet, dass** der Luftmassenspeicher (27) ein Befüllventil (33) zur externen Befüllung und/oder Vorbefüllung des Luftmassenspeichers (27) mit Luftmasse aufweist.

9. Fahrzeug (1) nach einem der vorhergehenden Ansprüche, **dadurch gekennzeichnet, dass** die Ventileinheit (12) der Luftfeder ein Einlassventil (13) und ein Auslassventil (14) aufweist, wobei die Kontrolleinrichtung (15) ausgebildet ist, das Einlassventil (13) oder das Auslassventil (14) zum Anheben oder Absenken der Luftfeder (6) zu betätigen.

10. Fahrzeug (1) nach Anspruch 9, **dadurch gekennzeichnet, dass** das Einlassventil (13) der Luftfeder (6) über die ausgangsseitige Druckluftleitung (26) unmittelbar mit dem Luftmassenspeicher (27) verbunden ist.

11. Fahrzeug (1) nach einem der vorhergehenden Ansprüche, **dadurch gekennzeichnet, dass** das Kabinenlagerungssystem (2) ein Überdruckventil (32) aufweist, wobei das Überdruckventil (32) zwischen dem Drucklufterzeuger (5) und der Luftfeder (6) angeschlossen ist.

12. Fahrzeug (1) nach einem der vorhergehenden Ansprüche, **dadurch gekennzeichnet, dass** die Kontrolleinrichtung (15) ausgebildet ist und/oder eine Niveauregulierung und/oder eine Neigungsregulierung der Fahrzeugkabine (4) durch eine Steuerung und/oder Regelung der Ventileinheit (12) der Luftfeder (6) umzusetzen.

13. Fahrzeug (1) nach einem der vorhergehenden Ansprüche, **dadurch gekennzeichnet, dass** das Kabinenlagerungssystem (2) mindestens einen Schwingungsdämpfer (7) zur schwingungsgedämpften Abstützung der Fahrzeugkabine (4) an dem Fahrzeugrahmen (3) aufweist, wobei der Schwingungsdämpfer einerseits mit dem Fahrzeugrahmen (3) und andererseits mit der Fahrzeugkabine (4) gekoppelt ist.

14. Fahrzeug (1) nach Anspruch 11, **dadurch gekennzeichnet, dass** der Drucklufterzeuger (5) in Fahrtrichtung betrachtet in einem Frontbereich und der Schwingungsdämpfer (7) in einem Heckbereich angeordnet ist.

15. Fahrzeug (1) nach einem der vorhergehenden Ansprüche, **dadurch gekennzeichnet, dass** das Fahrzeug (1) ein Nutzfahrzeug oder eine Baumaschine oder eine Landmaschine ist.

## Claims

1. Vehicle (1),
having a vehicle frame (3) and having a vehicle cab (4), which is mounted movably relative to the vehicle frame (3),
having a cab mounting system (2),
the cab mounting system (2) having at least one air spring (6) arranged between the vehicle frame (3) and the vehicle cab (4), wherein an air mass in the air spring (6) is variably adjustable via a valve unit (12), wherein the cab mounting system (2) has a position sensor system (17) for detecting a relative position between the vehicle cab (4) and the vehicle frame (3), and a control unit (15), the control unit (15) being designed to control the valve unit (12) of the air spring (6) on the basis of the relative position,
**characterized in that**
the cab mounting system (2) has at least one passive compressed air generator (19), which is designed to convey air mass for the air spring (6) on the basis of a relative movement between the vehicle frame (3) and the vehicle cab (4).

2. Vehicle (1) according to Claim 1, **characterized in that** the compressed air generator (19) is coupled in terms of movement to the vehicle frame (3) and to the vehicle cab (4) in such a way that the compressed air generator (19) conveys air mass during a relative rolling movement and/or a relative pitching movement between the vehicle frame (3) and the vehicle cab (4).

3. Vehicle (1) according to Claim 1 or 2, **characterized in that** the compressed air generator (19) is designed as an air pump.

4. Vehicle (1) according to any one of the preceding claims, **characterized in that** the compressed air generator (19) has a cylinder (20) and a piston (22) which is guided in the cylinder (20) via a piston rod (21) and divides the cylinder (20) into a first and a second working chamber (23, 24), wherein at least one of the working chambers (23, 24) is connected via an inlet valve (28, 29) to an environment and the other working chamber (23, 24) is connected via an outlet valve (30, 31) at least indirectly to the air spring (6).

5. Vehicle (1) according to Claim 4, **characterized in that** the compressed air generator (5) is designed as a double-acting air pump, wherein the first working chamber (23) is connected via a first inlet valve (28) to an environment and is connected via a first outlet valve (30) at least indirectly to the air spring (6), and wherein the second working chamber (24) is connected via a second inlet valve (29) to an environment and is connected via a second outlet valve (31) at least indirectly to the air spring (6).

6. Vehicle (1) according to any one of the preceding claims, **characterized in that** the cab mounting system (2) has an air mass accumulator (27) for temporarily storing the air mass conveyed by the compressed air generator (5), the air mass accumulator (27) being pneumatically connected via an input-side compressed air line (25) to the compressed air generator (5) and via an output-side compressed air line (26) to the air spring (6).

7. Vehicle (1) according to Claim 6, **characterized in that** the first and/or the second outlet valve (30, 31) of the compressed air generator (5) is/are connected via the input-side compressed air line (25) to the air mass accumulator (27).

8. Vehicle (1) according to Claim 6 or 7, **characterized in that** the air mass accumulator (27) has a filling valve (33) for the external filling and/or pre-filling of the air mass accumulator (27) with air mass.

9. Vehicle (1) according to any one of the preceding claims, **characterized in that** the valve unit (12) of the air spring has an inlet valve (13) and an outlet valve (14), wherein the control device (15) is designed to actuate the inlet valve (13) or the outlet valve (14) for raising or lowering the air spring (6).

10. Vehicle (1) according to Claim 9, **characterized in that** the inlet valve (13) of the air spring (6) is connected via the output-side compressed air line (26) directly to the air mass accumulator (27).

11. Vehicle (1) according to any one of the preceding claims, **characterized in that** the cab mounting system (2) has a pressure relief valve (32), the pressure relief valve (32) being connected between the compressed air generator (5) and the air spring (6).

12. Vehicle (1) according to any one of the preceding claims, **characterized in that** the control device (15) is designed to implement a level control and/or an inclination control of the vehicle cab (4) by controlling and/or regulating the valve unit (12) of the air spring (6).

13. Vehicle (1) according to any one of the preceding claims, **characterized in that** the cab mounting system (2) has at least one vibration damper (7) for the vibration-damped support of the vehicle cab (4) on the vehicle frame (3), the vibration damper being coupled on the one hand to the vehicle frame (3) and on the other hand to the vehicle cab (4).

14. Vehicle (1) according to Claim 11, **characterized in that** the compressed air generator (5) is arranged in a front region and the vibration damper (7) is arranged in a rear region, as viewed in the direction of travel.

15. Vehicle (1) according to any one of the preceding claims, **characterized in that** the vehicle (1) is a commercial vehicle or a construction machine or an agricultural machine.

## Revendications

1. Véhicule (1)
avec un châssis (3) de véhicule et avec une cabine (4) de véhicule montée de manière à pouvoir être déplacée par rapport au châssis (3) de véhicule,
avec un système de montage de cabine (2),
le système de montage de cabine (2) comportant au moins un ressort pneumatique (6) disposé entre le châssis (3) de véhicule et la cabine (4) de véhicule, une masse d'air dans le ressort pneumatique (6) pouvant être réglée de manière variable par une unité de soupape (12), le système de montage de cabine (2) comportant un système de détection de position (17) destiné à détecter une position relative entre la cabine (4) de véhicule et le châssis (3) de véhicule et une unité de commande (15), l'unité de commande (15) étant formée pour commander l'unité de soupape (12) du ressort pneumatique (6) sur la base de la position relative,
**caractérisé en ce que**
le système de montage de cabine (2) comporte au moins un générateur d'air comprimé (19) passif qui est formé pour transporter la masse d'air pour le ressort pneumatique (6) sur la base d'un mouvement relatif entre le châssis (3) de véhicule et la cabine (4) de véhicule.

2. Véhicule (1) selon la revendication 1, **caractérisé en ce que** le générateur d'air comprimé (19) est couplé en mouvement au châssis (3) de véhicule et à la cabine (4) de véhicule de telle manière que le générateur d'air comprimé (19) transporte une masse d'air lors d'un mouvement relatif de roulis et/ou lors d'un mouvement relatif de tangage entre le châssis (3) de véhicule et la cabine (4) de véhicule.

3. Véhicule (1) selon la revendication 1 ou 2, **caractérisé en ce que** le générateur d'air comprimé (19) est formé comme une pompe à air.

4. Véhicule (1) selon l'une des revendications précédentes, **caractérisé en ce que** le générateur d'air comprimé (19) comporte un cylindre (22) et un piston (20) guidé dans le cylindre (20) par une tige de piston (23), lequel divise le cylindre (20) en une première et une deuxième chambre de travail (21, 24), au moins une des chambres de travail (23, 24) étant reliée par une soupape d'admission (28, 29) à un environnement et l'autre chambre de travail (23, 24) étant reliée par une soupape d'évacuation (30, 31) au moins indirectement au ressort pneumatique (6).

5. Véhicule (1) selon la revendication 4, **caractérisé en ce que** le générateur d'air comprimé (5) est formé comme une pompe à air à double effet, la première chambre de travail (23) étant reliée par une première soupape d'admission (28) à un environnement et par une première soupape d'évacuation (30) au moins indirectement au ressort pneumatique (6), et la deuxième chambre de travail (24) étant reliée par une deuxième soupape d'admission (29) à un environnement et par une deuxième soupape d'évacuation (31) au moins indirectement au ressort pneumatique (6).

6. Véhicule (1) selon l'une des revendications précédentes, **caractérisé en ce que** le système de montage de cabine (2) comprend un accumulateur de masse d'air (27) pour le stockage intermédiaire de la masse d'air transportée par le générateur d'air comprimé (5), l'accumulateur de masse d'air (27) étant relié pneumatiquement au générateur d'air comprimé (5) par une conduite d'air comprimé côté entrée (25) et au ressort pneumatique (6) par une conduite d'air comprimé côté sortie (26).

7. Véhicule (1) selon la revendication 6, **caractérisé en ce que** la première et/ou la deuxième soupape d'évacuation (30, 31) du générateur d'air comprimé (5) sont reliées par la conduite d'air comprimé côté entrée (25) à l'accumulateur de masse d'air (27).

8. Véhicule (1) selon la revendication 6 ou 7, **caractérisé en ce que** l'accumulateur de masse d'air (27) comporte une soupape de remplissage (33) pour le remplissage externe et/ou le pré-remplissage de l'accumulateur de masse d'air (27) avec une masse d'air.

9. Véhicule (1) selon l'une des revendications précédentes, **caractérisé en ce que** l'unité de soupape (12) du ressort pneumatique comporte une soupape d'admission (13) et une soupape d'évacuation (14), le dispositif de commande (15) étant formé pour actionner la soupape d'admission (13) ou la soupape d'évacuation (14) pour soulever ou abaisser le ressort pneumatique (6) .

10. Véhicule (1) selon la revendication 9, **caractérisé en ce que** la soupape d'admission (13) du ressort pneumatique (6) est reliée directement à l'accumulateur de masse d'air (27) par la conduite d'air comprimé côté sortie (26).

11. Véhicule (1) selon l'une des revendications précédentes, **caractérisé en ce que** le système de montage de cabine (2) comporte une soupape de surpression (32), la soupape de surpression (32) étant raccordée entre le générateur d'air comprimé (5) et le ressort pneumatique (6).

12. Véhicule (1) selon l'une des revendications précédentes, **caractérisé en ce que** le dispositif de commande (15) est formé pour mettre en œuvre une régulation de niveau et/ou une régulation d'inclinaison de la cabine (4) de véhicule par une commande et/ou une régulation de l'unité de soupape (12) du ressort pneumatique (6).

13. Véhicule (1) selon l'une des revendications précédentes, **caractérisé en ce que** le système de montage de cabine (2) comporte au moins un amortisseur de vibrations (7) pour le support amorti en vibrations de la cabine (4) de véhicule sur le châssis (3) de véhicule, l'amortisseur de vibrations étant couplé d'une part au châssis (3) de véhicule et d'autre part à la cabine (4) de véhicule.

14. Véhicule (1) selon la revendication 11, **caractérisé en ce que** le générateur d'air comprimé (5) vu dans le sens de la marche est disposé dans une zone avant et l'amortisseur de vibrations (7) est disposé dans une zone arrière.

15. Véhicule (1) selon l'une des revendications précédentes, **caractérisé en ce que** le véhicule (1) est un véhicule utilitaire ou un engin de chantier ou un engin agricole.
